# EUROPEAN PATENT APPLICATION

(11) **EP 2 793 162 A1**
(43) Date of publication of application: **22.10.2014**
(21) Application number: 12858495.0
(22) Date of filing: 06.12.2012
(51) Int. Cl.: G06F 21/60

(54) **ANONYMIZATION DEVICE, ANONYMIZATION METHOD, AND COMPUTER PROGRAM**

(30) Priority: 15.12.2011 JP 2011274791
(71) Applicant: NEC Corporation, Tokyo 108-8001 (JP)
(72) Inventor: TAKAHASHI, Tsubasa, Tokyo 108-8001 (JP)
(74) Representative: Vossius & Partner
(86) International application number: PCT/JP2012/007825
(87) International publication number: WO 2013/088681

(57) **Abstract**

Provided is an anonymization apparatus for optimally and fully performing anonymization, in anonymizing history information, in a state where a specific property existing in a plurality of records with an identical identifier is maximally maintained.

This anonymization apparatus includes record extracting means for extracting, with respect to history information including a plurality of records each of which includes unique identification information associated with at least a quasi-identifier and sensitive information, on the basis of smallness of ambiguity of a property existing between the plurality of records that are able to satisfy desired anonymity and share a specific unique identifier, a record with other unique identifier different from the specific unique identifier from the history information and anonymizing means for giving commonality to and thereby abstracting the quasi-identifier each included in the plurality of records, so that an individual attribute in the plurality of records extracted by the record extracting means satisfies the desired anonymity.

## Description

### [Technical Field]

The present invention relates to a technical field which anonymizes information (history information), such as personal information for example, whose disclosure and utilization with original information contents is not desirable.

### [Background Art]

Log information which is generated from service activities provided to users every day, such as a purchase history and a medical care history, etc., is accumulated by service providers as history information. By analyzing the history information, it is possible to grasp an action pattern of a specific user, grasp a unique tendency of a group, estimate a possible event in the future, and perform factor analysis on past events. Utilizing the history information and the analysis results, the service providers can intensify and review their own business. The history information is, therefore, beneficial information with a high utility value.

The history information which the service providers possess is beneficial for third parties except the service providers. Since the third parties can acquire information which they cannot acquire by themselves by using the history information, the third parties can improve their own service and marketing. The service provider may ask analysis of the history information to third parties or may disclose the history information for the purpose of researches.

The history information with high utility value may include information which a person who relates to the history information does not want to be known among the other persons, or include information which should not be known by third parties. Such information is generally called sensitive information (subtlety information: Sensitive Attribute (SA), Sensitive Value). For example, concerning the purchase history, purchased commodities may be the sensitive information. Concerning the medical care information, a disease name and a medical action name are the sensitive information.

The history information frequently includes a user identifier uniquely identifying a service user (user ID) and a plurality of attributes characterizing the service user (attribute information). The user identifier corresponds to a name, a membership number, a number of an insured person, and the like. The attributes characterizing the service user corresponds to sex, the date of birth, occupation, an inhabited range, a postal number, and the like. The service provider makes association between the user identifier, a plurality of types of attributes and sensitive information, and stores them as one record. The service provider accumulates the record as the history information, every time a specific user whose user identifier is associated with the record enjoys a service. Since it is possible to identify the service user by using the user identifier if the history information with the user identifier is given to the third parties, an issue of privacy violations may occur.

A person may be distinguished by combining one or more attribute values included in each record in a data set composed of a plurality of the records. The set of attributes which can be used to distinguish an individual may be identified is called quasi-identifiers (Quasi-Identifiers). Therefore, even though the user identifier is removed from the history information, the issue of privacy violations may occur if it is possible to distinguish a person on the basis of the quasi-identifier.

On the other hand, since a statistical analysis becomes impossible if all the quasi-identifiers are removed from the history information, original utility from the history information is lost largely. In this case, for example, an analysis of product sales which people of a specific generation tend to purchase, an analysis of specific diseases which people who reside in a certain region are affected with, and the like, cannot be conducted.

As a technique transforming a data set of the history information having such properties into a form in which privacy is protected while keeping the original utility, data anonymization (anonymizing technology: Anonymization) is known.

As a document explaining the anonymization technology, for example, Patent literature 1 discloses the technology in which by modifying data received from a user terminal and evaluating privacy information included in the received data, the received data is changed into information without user identification information.

Non-Patent literature 1 describes "k-anonymity" which is the most known anonymity metric. The technique which gives the k-anonymity to data set of an anonymization target is called "k-anonymization". In the k-anonymization, a process in which a target quasi-identifier is transformed is executed, so that at least k or more than k records having an identical quasi-identifier exist in the data set of anonymization target. As the changing process, generalization, and cutout, and the like, are known. In the generalization, detailed original information is changed to abstracted information.

Non-Patent literature 2 describes "1-diversity" which is one of anonymity metrics beyond k-anonymity. In the 1-diversification, a process in which a target quasi-identifier is changed is executed, so that at least 1 types of different sensitive information are included in records having an identical quasi-identifier.

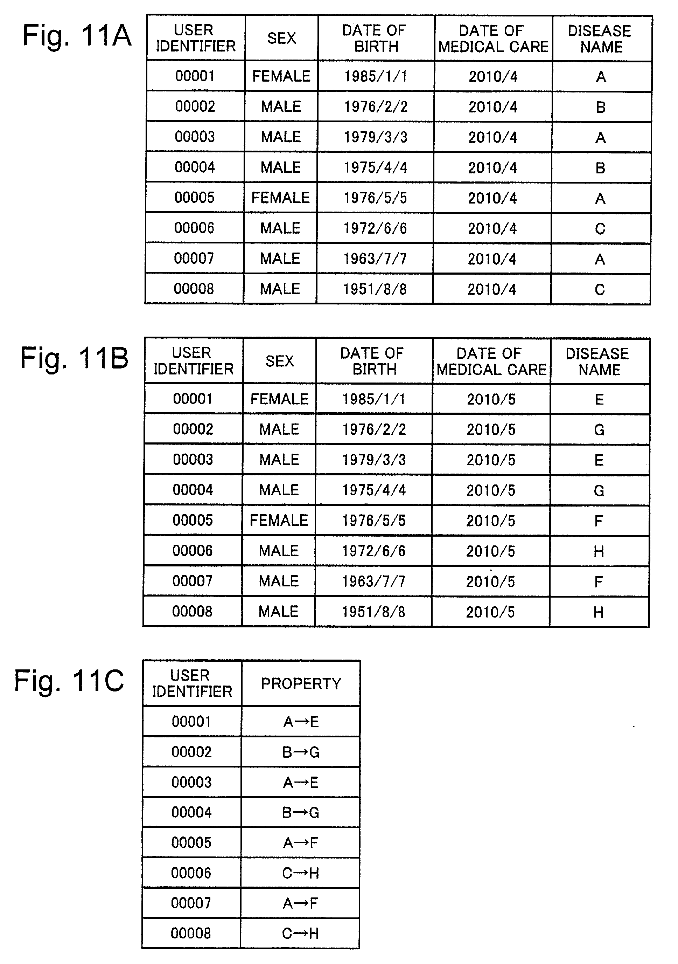

The k-anonymization guarantees the number of records associated with a quasi-identifier is greater than k or equal to k. The i-diversion guarantees types of sensitive information associated with a quasi-identifier are greater than 1 or equal to 1 types. An example of a data set on which the 1-diversification is executed is described below by referring to Fig. 11A to Fig. 11C.

In the k-anonymization in Non-Patent literature and the i-diversion in Non-Patent literature 2, when a plurality of records each having an identical identifier exist, properties between different events, for example, order or relation between the records, are not considered. The properties are, in other words, characteristics, transition, and property (hereinafter, refer to as "property" in the application). Therefore, the property between the records may be obscured or be lost.

As an anonymization method for storing order on a time axis targeting a plurality of records each having an identical identifier, an anonymization technology on a movement track is known.

Non-Patent literature 3 is a paper on a technology anonymizing the movement track in which positional information is associated with timeline. The anonymization technology in Non-Patent literature 3 is specifically an anonymization technology which guarantees consistent k-anonymity by regarding the movement track from a starting point to ending point as a series of sequences. In the anonymization technology on the movement track, a tube-shaped anonymous movement track in which k or more than k movement tracks with geographic similarity are bundled is generated. In the anonymization technology of the movement track, the anonymous movement track in which geographic similarity is maximized is generated under anonymity restriction.

In the anonymization method of the movement track represented by Non-Patent literature 3, properties which exists between records each having an identical identifier, in particular, time-series order relation is maintained. In Non-Patent literature 3, however, it is mainly intended to construct the anonymous movement track in which geographic similarity is maximized, and the properties existing between records are not necessarily maintained. Non-Patent literature 3 does not guarantee for arbitrary anonymity, such as k-anonymity, 1-diversity and m-invariance.

### [Citation List]

[Patent literature 1] Japanese patent application Laid-Open No. 2011-180839

### [Non-Patent literature]

[Non-Patent literature 1] L. Sweeney, "k-anonymity: a model for protecting privacy", International Journal on Uncertainty, Fuzziness and Knowledge-based Systems, 10(5), pp. 555-570, 2002.
[Non-Patent literature 2] Machanavajjhala, A., Kifer, D., Gehrke, J., & Venkitasubramaniam, M. 1-diversity: Privacy beyond k-anonymity. ACM Transactions on Knowledge Discovery from Data (TKDD), 1(1), 3, 2007.
[Non-Patent literature 3] O. Abul, F. Bonchi and M. Nanni, "Never Walk Alone: Uncertainty for Anonymity in Moving Objects Databases" In Proceedings of 24th IEEE International Conference on Data Engineering, pp.376-385, 2008.

### [Summary of Invention]

### [Technical Problem]

A problem in anonymization of the history information in which a plurality of records each having an identical identifier exist is considered by referring to examples shown in Fig. 11A to Fig. 11C, Fig. 12A, Fig. 12B, and Fig. 13.

As an example of common history information, medical care information which is collected in health-care institutions, as a service provider, is given. The medical care information frequently includes a lot of records which associated with different medical care times of day on the basis of a user identifier which is given to the same patient.

Fig. 11A shows, as an example, a table of history information before anonymization (medical care history on April, 2010). Fig. 11B shows, as an example, a table of history information before anonymization (medical care history on May, 2010).

Specifically, the history information shown in Fig. 11A is the table in which sex, a date of birth, a date of medical care and disease name associated with each other at each use identifier identifying a patient with respect to April, 2010. The history information shown in Fig. 11B is the table in which history information similar to Fig. 11A is formed with respect to May, 2010. In Fig. 11B, on the basis of the same identifiers as Fig. 11A, similar type of records associated with each other with respect to a different date of medical care. In Fig. 11A and Fig. 11B, the sex, the date of birth, and the date of medical care correspond to the aforementioned "quasi-identifier". The disease name corresponds to the aforementioned "sensitive information".

Fig. 11C shows, as an example, a table representing properties which exist between datasets shown in Fig. 11A and Fig. 11B. Specifically, in Fig. 11C, for example, concerning records of the patient with the user identifier 00001 in April and May, 2010, it is understood that the property exists in which the patient is affected with the disease A in April and the disease E in May. The arrow shown in Fig. 11C (hereinafter described as ">" in following descriptions) represents transition of diseases. It is also understood that the property exists in which the patient with the user identifier 00002 is affected with the disease B in April and the disease G in May.

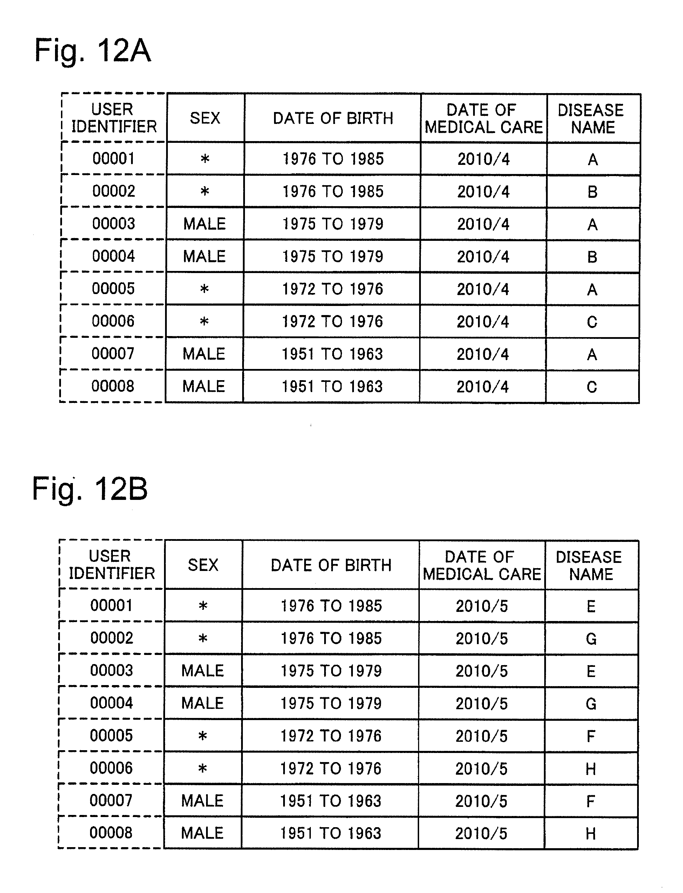

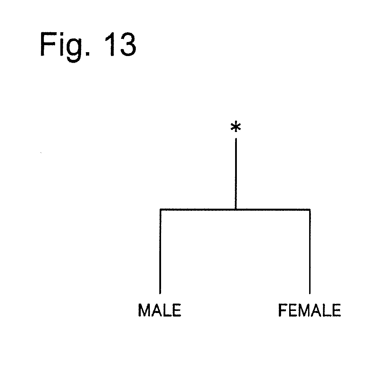

A case is explained in which common anonymization is executed with respect to each of the data sets shown in Fig. 11A and Fig. 11B. Fig. 12A shows, as an example, a result of anonymization of the history information shown in Fig. 11A. Fig. 12B shows, as an example, a result of anonymization of the history information shown in Fig. 11B. Fig. 13 shows, as an example, a generalization tree which is utilized when sex is abstracted.

Specifically, tables shown in Fig. 12A and Fig. 12B show, as an example, results anonymized by carrying out 1-diversity (i=2) with respect to the history information exemplified in Fig. 11A and Fig. 11B. The user identifiers in dashed line frames in Fig. 12A and Fig. 12B are information which is not disclosed to users by being deleted when the anonymized results are used. The user identifiers are shown for convenience of explanation.

Fig. 13 shows an example of the generalization hierarchy which is used when sex is abstracted. Fig. 13 shows an example of conceptual hierarchy of an abstraction tree which determines an abstracting method when sex, as a quasi-identifier, is abstracted. Fig. 13 shows "*" corresponds to both male and female and "*" is a broader concept of two types of the sexes (male, female).

In exemplary embodiments described below, Fig. 11A to FIG. 11C, Fig. 12A, Fig. 12B are referred on the basis of the aforementioned premise.

The anonymization technology explained here is an existing technology individually anonymizing a single data set (for April, for May). In the common anonymization technology, as shown in Fig. 11A and Fig. 11B, a plurality of data sets each having different medical care time of day are individually anonymized per month, as shown in Fig. 11A and Fig. 11B for April and Fig. 12A and Fig. 12B for May. In common anonymization, even data set which is not divided into an explicit unit, like per month, is anonymized with respect to an individual record, if a plurality of records each having an identical user identifier exists.

In this case, time series property may be lost which is one of the properties existing between a plurality of records which are each associated with an identical identifier. In examples shown in Fig. 12A and Fig. 12B, it is understood that the user identifiers are deleted in the anonymized records (however, they are shown for convenience in the figures.) and quasi-identifiers are abstracted.

The "sex" in the records which associated with user identifiers 00001, 00002, 00005, and 00006 is obscured according to the abstraction tree shown in Fig. 13, and is represented by the broader concept, "*", in Fig. 12A and Fig. 12B.

Further, the date of birth shown in Fig. 12A and Fig. 12B represents a range (term). This represents that attributes "the date of birth" shown in Fig. 11A and Fig. 11B are changed (abstracted) so that two or more records have a common value, and consequently the date is deleted.

In anonymization, in order to satisfy desired anonymity, a quasi-identifier is abstracted so that a plurality of records have a common quasi-identifier (identical identifier).

The property shown in Fig. 11C originally exists between the data set in Fig. 11A and the data set in Fig. 11B. In Fig. 11C, the property exists in which the records of April, 2010 having the disease A change into the records of May, 2010 having the disease E or the disease F. When such property is summarized, data sets before anonymization shown in Fig.11A and Fig. 11 B includes following time-series properties.
· A>E, A>F,
· B>G,
· C>H,
where the operator ">" represents time-series order included in an individual property, for example, X>Y represents that a state Y appears after a state X (the same holds true for following descriptions.)

However, if only Fig. 12A and Fig. 12B are focused, it can be estimated that following time-series properties exist between the two data sets after anonymization shown in the figures.
· A>E, A>F, A>G, A>H,
· B>E, B>G,
· C>F, C>H,

When an example of the time-series properties after the anonymization is explained, a case is considered in which patients who are affected with the disease A in April, 2010 are initially focused. In this case, patients are targeted whose date of birth falls within four terms shown in Fig. 12A ("1976 to 1985", "1975 to 1979", "1972 to 1976", and "1951 to 1963"). When the same terms of the date of birth in Fig. 12B are considered with respect to the patients, following properties can be read.
· Property of having the diseases E and G in the term "1976 to 1985",
· Property of having the diseases E and G in the term "1975 to 1979",
· Property of having the diseases F and H in the term "1972 to 1976",
· Property of having the diseases F and H in the term "1951 to 1963".

Even though the properties on only the user identifiers 00001, 00003, 00005 and 00007 which are deleted through anonymization are focused in the records shown in Fig. 12A, not only the deleted user identifiers, but the properties on the user identifiers 00002, 00004, 00006 and 00008 (i.e. A>G, A>H) are also derived in Fig. 12B..

A case is considered in which patients who are affected with the disease B in April, 2010 are focused. In this case, as shown in Fig. 12A, patients whose date of birth falls within the two terms ("1976 to 1985", "1975 to 1979") are targeted. In this case, if the same term of the date of birth is focused in Fig. 12B with respect to the patients, the following properties can be read.
· Property of having the diseases E and G in the term "1976 to 1985", and
· Property of having the diseases E and G in the term "1975 to 1979".

Even though the properties on only the user identifiers 00002 and 00004 which are deleted through anonymization are focused in the records shown in Fig. 12A, not only the deleted user identifiers, but the properties on the user identifiers 00001 and 00003 (i.e. B>G) are also derived in Fig. 12B.

A case is considered in which patients who are affected with the disease C in April, 2010 are focused. In this case, as shown in Fig. 12A, patients whose date of birth falls within the two terms ("1972 to 1976", "1951 to 1963") are targeted. In this case, if the same term of the date of birth is focused in Fig. 12B with respect to the patients, the following properties can be read.
· Property of having the diseases F and H in the term "1972 to 1976", and
· Property of having the diseases F and H in the term "1951 to 1963".

Even though the properties on only the user identifiers 00006 and 00008 which are deleted through anonymization are focused in the records shown in Fig. 12A, not only the deleted user identifiers, but the properties on the user identifiers 00005 and 00007 (i.e. C>F) are also derived in Fig. 12B.

As can be noted from the aforementioned specific examples, even though the original time-series properties before anonymization in Fig. 11C are obscured, the time-series properties after anonymization estimated on the basis of the tables in Fig. 12A and Fig. 12B includes properties which should not originally be derived.

It is understood that when general diversification (anonymization) is simply executed with respect to respective records, original properties which exist over a plurality of records may be distorted. If the original properties are deteriorated due to anonymization, the properties which originally exist between targeted data sets are misunderstood.

The present invention is achieved in the light of the aforementioned problem. A main object of the present invention is to provide an anonymization apparatus, and the like, for optimally and fully performing anonymization while maximally maintaining a state in which an original property existing between a plurality of records each having an identical identifier when history information is anonymized.

### [Solution to Problem]

In order to achieve the object, the anonymization apparatus of the present invention is characterized in having a following configuration.

The anonymization apparatus of the present invention includes, record extracting means for extracting, with respect to history information including a plurality of records each of which includes unique identification information associated with at least a quasi-identifier and sensitive information, on the basis of smallness of ambiguity of a property existing between the plurality of records that are able to satisfy desired anonymity and share a specific unique identifier, a record with other unique identifier different from the specific unique identifier from the history information; and anonymizing means for giving commonality to and thereby abstracting the quasi-identifier each included in the plurality of records, so that an individual attribute in the plurality of records extracted by the record extracting means satisfies the desired anonymity.

As another aspect achieving the object, an anonymization method of the present invention is characterized in having a following configuration.

The anonymization method of the present invention includes, extracting, with respect to history information including a plurality of records each of which includes unique identification information associated with at least a quasi-identifier and sensitive information, on the basis of smallness of ambiguity of a property existing between the plurality of records that are able to satisfy desired anonymity and share a specific unique identifier, a record with other unique identifier different from the specific unique identifier from the history information by using a computer; and giving commonality to and thereby abstracting the quasi-identifier each included in the plurality of records, so that an individual attribute in the extracted plurality of records satisfies the desired anonymity, by using the computer or a different computer.

The object is achieved by a computer program causing a computer to realize the anonymization apparatus with the above described configuration and the corresponding method, and a computer-readable recording medium storing the computer program.

### [Advantageous Effect of Invention]

According to the present invention, it is achieved to provide the anonymization apparatus, and the like, for optimally and fully performing anonymization while maximally maintaining a state in which an original property existing between a plurality of records each having an identical identifier when history information is anonymized.

### [Brief Description of Drawings]

[Fig. 1]

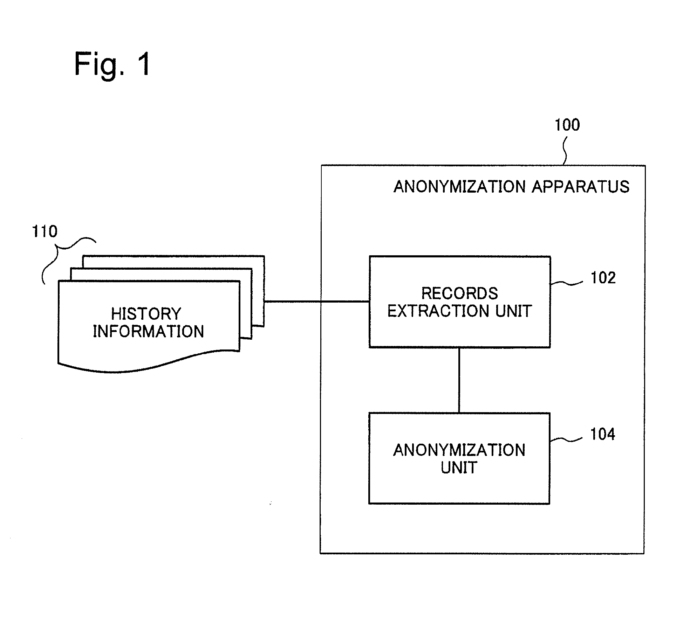

   Fig. 1 is a functional block diagram illustrating a configuration of an anonymization apparatus 100 of a first exemplary embodiment of the present invention,
[Fig. 2]

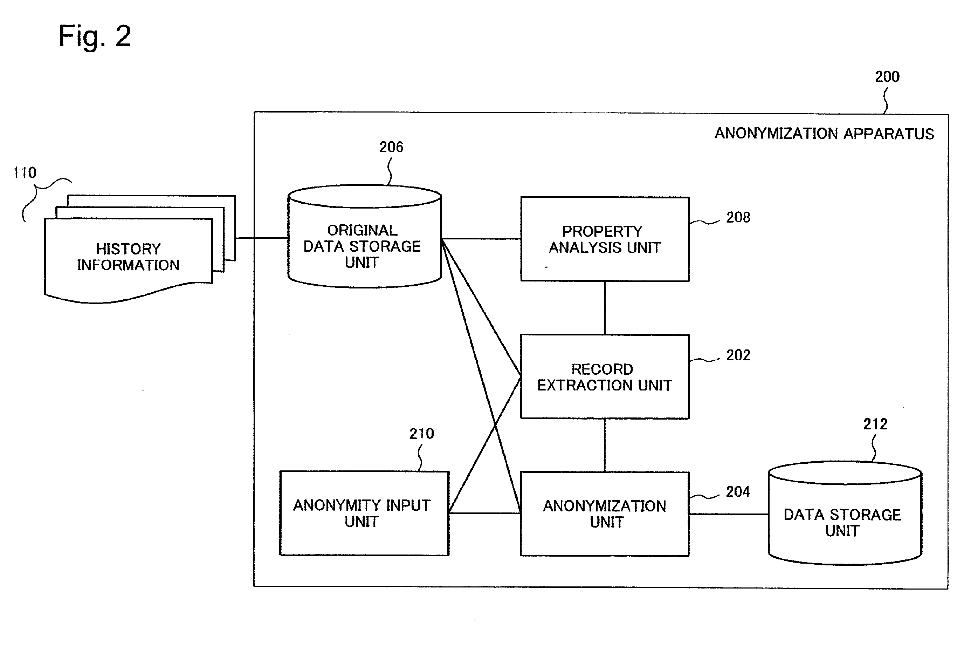

   Fig. 2 is a functional block diagram illustrating a configuration of an anonymization apparatus 200 of a second exemplary embodiment of the present invention,
[Fig. 3]

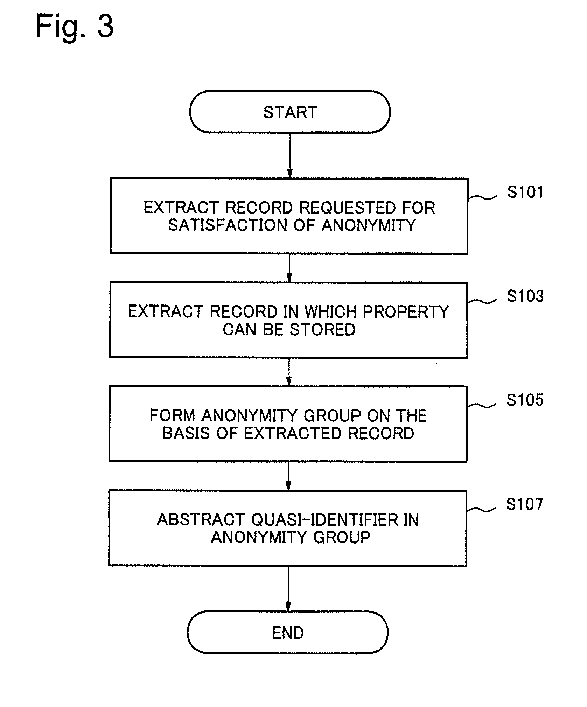

   Fig. 3 is a flowchart illustrating steps of control processing in the anonymization apparatus of the first exemplary embodiment of the present invention,
[Fig. 4A]

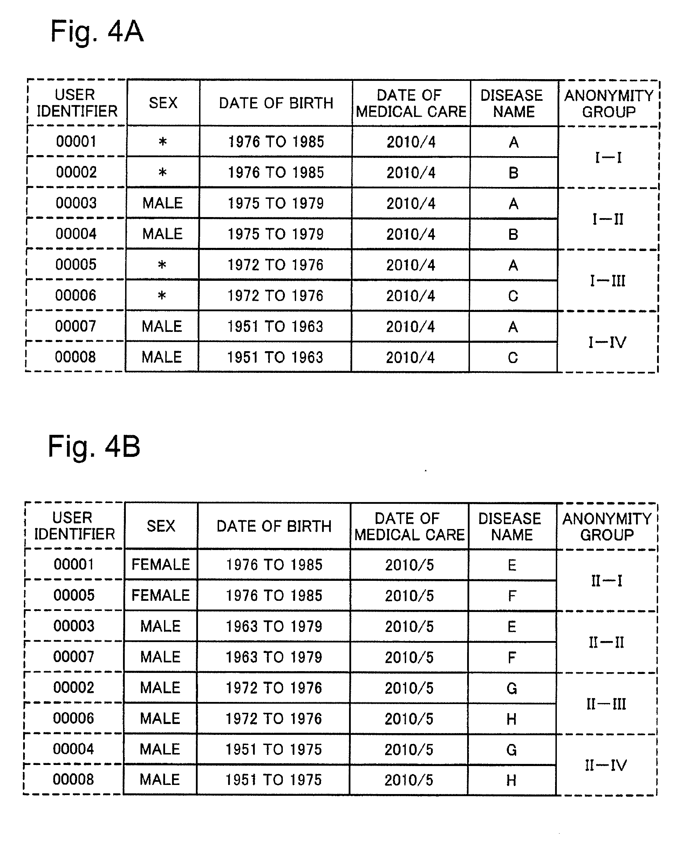

   Fig. 4A is a diagram illustrating a table exemplifying anonymized results by using history information before anonymization shown in Fig. 11A in the first exemplary embodiment,
[Fig. 4B]
   Fig. 4B is a diagram illustrating a table exemplifying anonymized information, so that reduction of abstraction level of original properties (Fig. 11C) is suppressed, by using history information before anonymization shown in Fig. 11A in the first exemplary embodiment,
[Fig. 5]

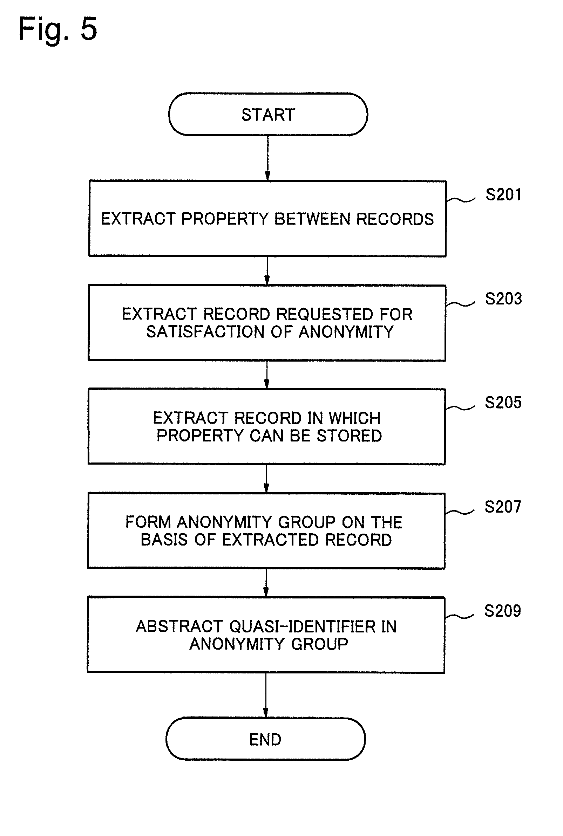

   Fig. 5 is a flowchart illustrating steps of control processing in the anonymization apparatus of the second exemplary embodiment of the present invention,
[Fig. 6]

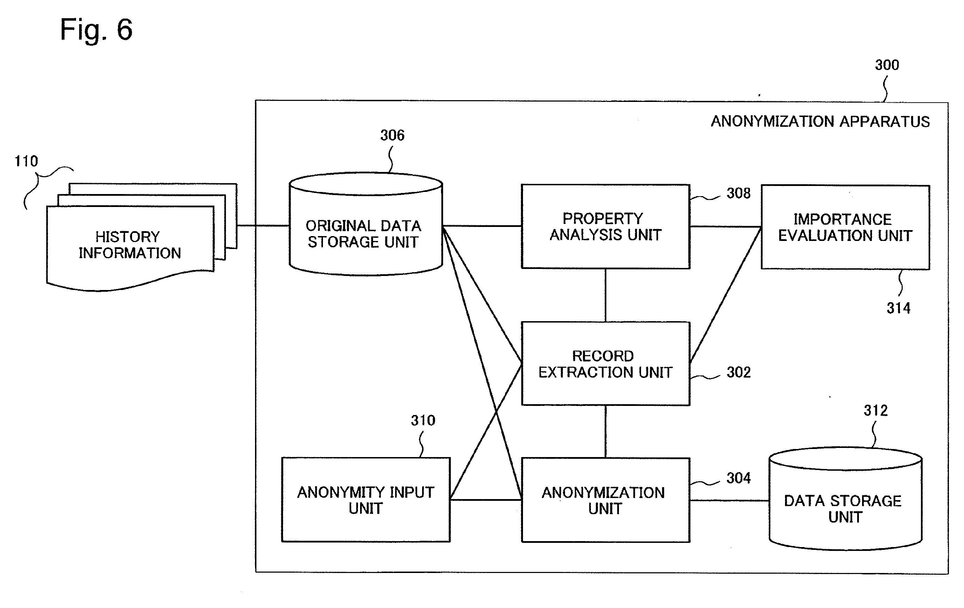

   Fig. 6 is a functional block diagram illustrating a configuration of an anonymization apparatus 300 of a third exemplary embodiment of the present invention,
[Fig. 7]

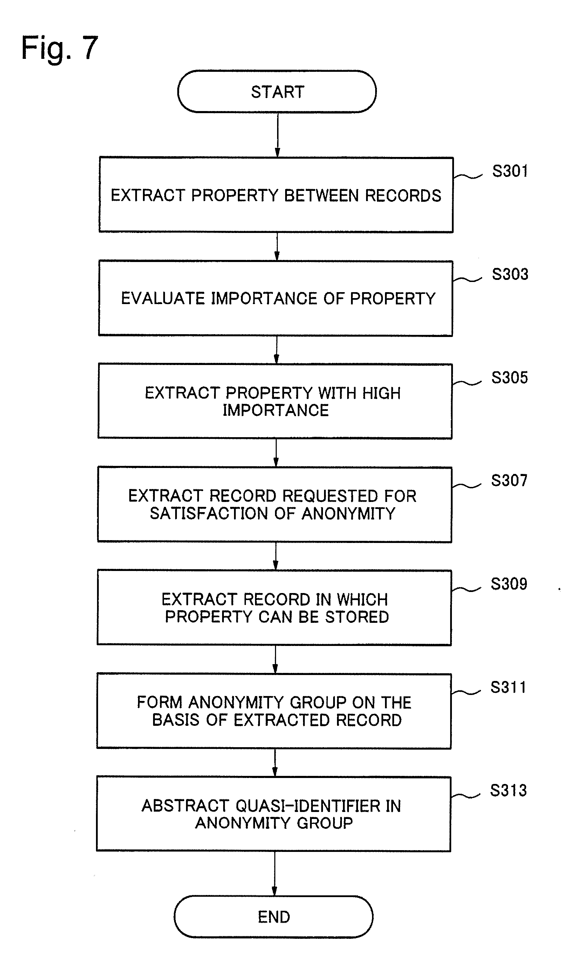

   Fig. 7 is a flowchart illustrating steps of control processing in the anonymization apparatus of the third exemplary embodiment of the present invention,
[Fig. 8]

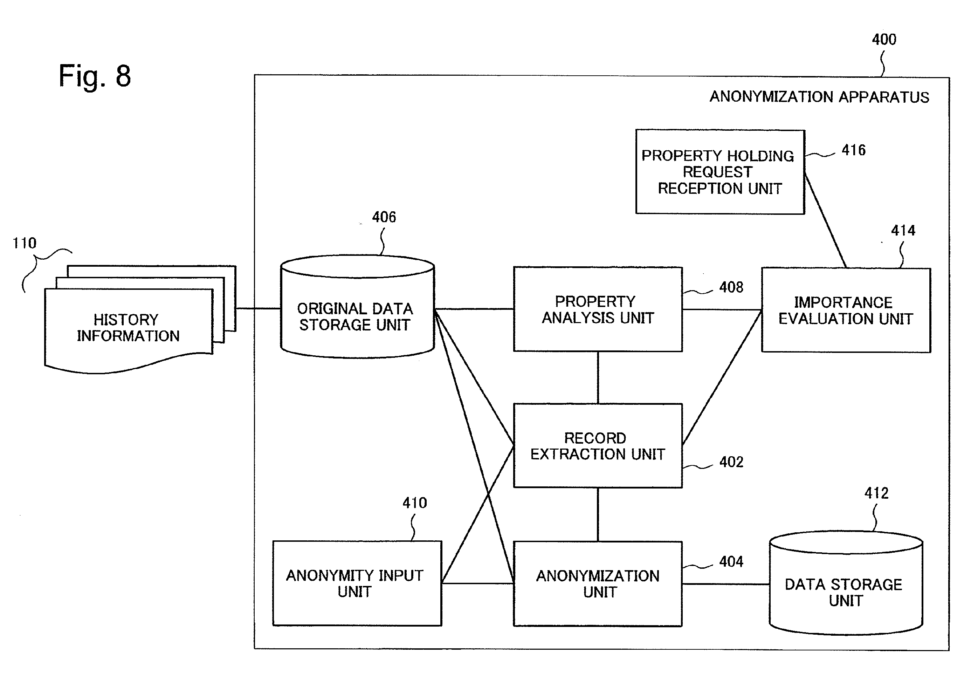

   Fig. 8 is a functional block diagram illustrating a configuration of an anonymization apparatus 400 of a fourth exemplary embodiment of the present invention,
[Fig. 9]

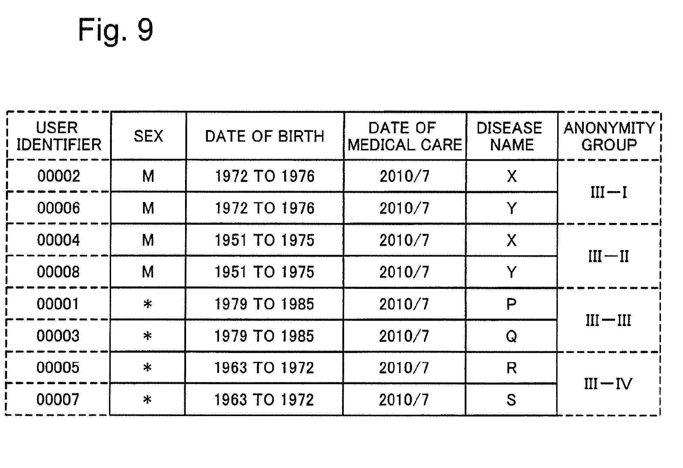

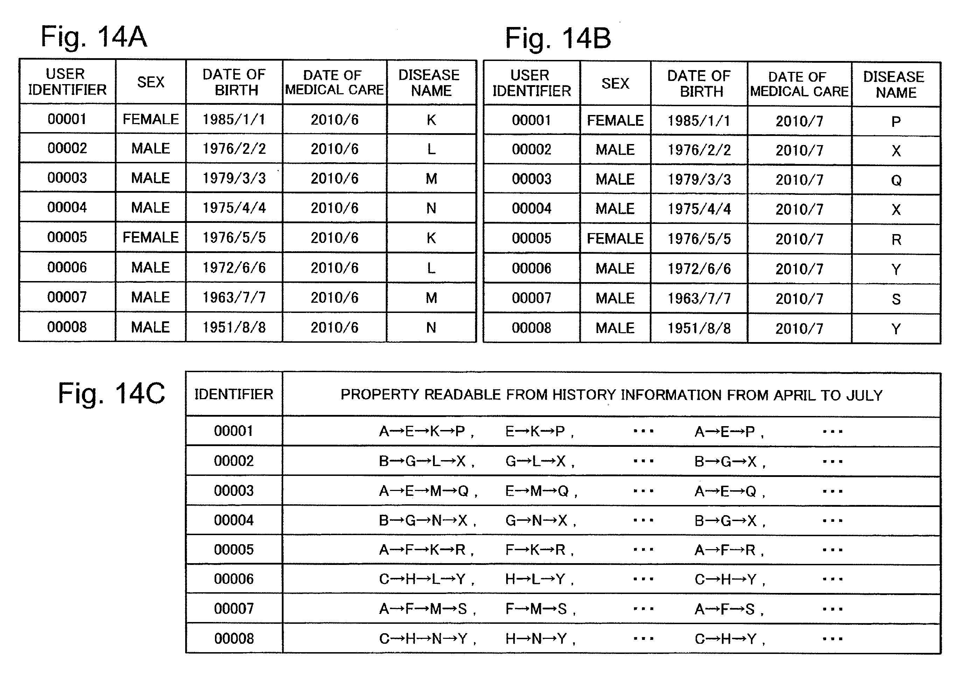

   Fig. 9 is a diagram illustrating a table exemplifying anonymized results, so that reduction of abstraction level of original properties (Fig. 14C) is suppressed, by using history information before anonymization shown in Fig. 14B in the third exemplary embodiment,
[Fig. 10]

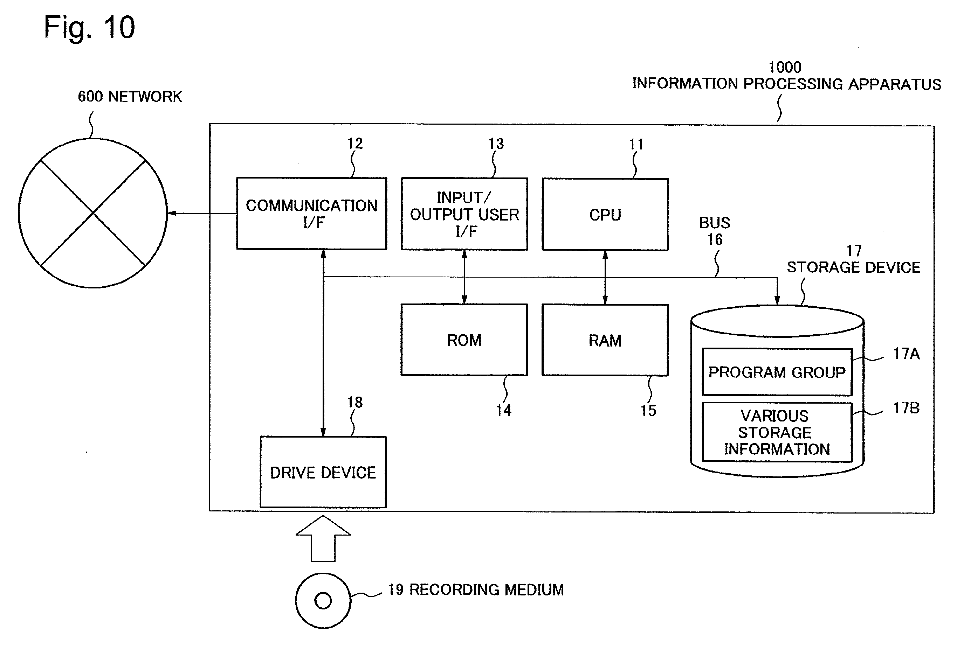

   Fig. 10 is a diagram explaining, as an example, a hardware configuration of a computer (information processing apparatus) which can achieves the first to the fourth exemplary embodiments of the present invention,
[Fig. 11 A]
   Fig. 11A is a diagram exemplifying a table of history information before anonymization (medical care history in April, 2010),
[Fig. 11B]
   Fig. 11B is a diagram exemplifying a table of history information before anonymization (medical care history in May, 2010),
[Fig. 11C]
   Fig. 11C is a diagram exemplifying a property existing between data sets shown in Fig. 11A and Fig. 11B,
[Fig. 12A]
   Fig. 12A is a diagram exemplifying results of anonymization of history information shown in Fig. 11A,
[Fig. 12B]
   Fig. 12B is a diagram exemplifying results of anonymization of history information shown in Fig. 11B,
[Fig. 13]
   Fig. 13 is a diagram exemplifying a generalization tree which is used when sex is abstracted,
[Fig. 14A]
   Fig. 14A is a diagram exemplifying a table of history information before anonymization (medical care history in June, 2010),
[Fig. 14B]
   Fig. 14B is a diagram exemplifying a table of history information before anonymization (medical care history in July, 2010),
[Fig. 14C]
   Fig. 14C is a diagram exemplifying a table for each user identifier on properties existing between history information before anonymization from April to July, 2010 (each data set shown in Fig. 11A, Fig. 11B, Fig. 14A, and Fig. 14B).

### [Description of Embodiments]

Exemplary embodiments of the present invention are explained in detail referring to the drawings. In the drawings which are referred to in the following exemplary embodiments and explanation thereof, a general technology is applied to configurations which are not related to essence of the present invention, and detailed explanation and illustration on the configurations in the exemplary embodiments are omitted.

Relations exemplified in Fig. 11A, Fig. 11B, and Fig. 11C which are referred in the aforementioned "Technical Problem" are used in the following exemplary embodiments for convenience of explanations.

As explanation in the aforementioned "Background art", with respect to characteristics, transition, property, and the like, between changing events, a description "property" is used in the following exemplary embodiments.

### <First exemplary embodiment>

Initially, an anonymization apparatus of a first exemplary embodiment of the present invention is described. Fig. 1 is a functional block diagram illustrating a configuration of an anonymization apparatus 100 of the first exemplary embodiment of the present invention. The anonymization apparatus 100 includes a record extraction unit 102 and an anonymization unit 104. The anonymization apparatus 100 carries out anonymization on the basis of history information 110. In the exemplary embodiment, the anonymization apparatus 100 acquires a property on history information 110 to be focused, for example, from an external device.

The history information 110 includes an identifier binding (associating with) a plurality of records, and sensitive information. The history information 110 is, for example, private information in which it is not desirable to be disclosed or used with original contents. The history information 110 is, for example, a plurality of records which share an identical insured person number as a user identifier and have a different date of medical care. Specifically, this exemplary embodiment having an example shown in Fig. 11A and Fig. 11B, the history information 110 includes, as attributes characterizing a user represented by the user identifier, sex, the date of birth, the date of medical care and a disease name. In the attributes, the user identifier is a unique identifier. The disease name is sensitive information.

The record extraction unit 102 is able to suppress abstraction of a property existing between a plurality of records each having a specific identical user identifier (common user identifier), and extracts a plurality of records which can satisfy desired anonymity from the history information 110. In other words, the record extraction unit 102 is able to satisfy desired anonymity ("2-diversity" in the exemplary embodiment), and extracts a record having a user identifier different from the identical user identifier on the basis of smallness of ambiguity of a property included in the history information 110.

The anonymization unit 104 abstracts, so that respective attributes included in the plurality of records extracted by the record extraction unit 102 satisfy the desired anonymity, a quasi-identifier included in the records.

In the exemplary embodiment, the anonymization apparatus 100 can be composed of information processing apparatuses, like a computer. The anonymization apparatus 100 and each element (functional block) in anonymization apparatuses in the following exemplary embodiments are achieved when a computer program (software program: hereinafter, referred to as "program") are executed in hardware resources included in the information processing apparatus. For example, the anonymization apparatus 100 works when hardware, such as CPU (Central Processing Unit) in a computer, a main storage device, an auxiliary storage device, and programs which are loaded from a storage device to the main storage device cooperate. An installation configuration of programs is not limited to the block configuration (record extraction unit 102, anonymization unit 104) and various installation configurations which an average person in the art can employs are applicable (the same is true in following exemplary embodiments). An example of hardware configuration which the exemplary embodiment can be applied to is described below by referring to Fig. 10. The anonymization apparatus 100 and the anonymization apparatuses in the following exemplary embodiments may be achieved by special device.

Next, a specific operation of the anonymization apparatus 100 is explained by referring to Fig. 3 as well. Fig. 3 is a flowchart illustrating steps of control processing in the anonymization apparatus of the first exemplary embodiment of the present invention.

### (Record extraction unit 102)

Initially, an operation of the record extraction unit 102 is described. The record extraction unit 102 extracts a plurality of records which are required to satisfy the desired anonymity from the history information 110 (step S101). The record extraction unit 102 selects a record with the smallest ambiguity from the plurality of records extracted in the step S101 (step S103). Processing steps in the two steps are explained in detail.

Initially, in the step S101, the record extraction unit 102 extracts the plurality of records required to satisfy the desired anonymity from the history information 110. In this exemplary embodiment, the record which is an extraction target in the step S101 is called "target record". With respect to the target record, the plurality of records required to satisfy the desired anonymity (i.e. the plurality of records extracted in the step S101) are called "anonymization candidate record group".

For example, a case is explained in which a record set having the date of medical care of May, 2010 (hereinafter, may be described as "2010/5") (Fig. 11B) is the history information 110. In this case, as one example, a case is considered in which a record which is associated with a user identifier 00001 (focused specific user identifier) in the history information 110 is the target record.

With respect to the target record, an anonymization candidate record group required to satisfy "2-diversity", as the desired anonymity, is records of the same date of medical care having different sensitive information. In the record set shown in Fig. 11B, the sensitive information of the target record is the disease name E. In this case, therefore, the anonymization candidate record group is a plurality of records which are associated with disease names (F, G, H) different from the disease name E. The record extraction unit 102 selects respective record associated with user identifiers 00002, 00004, 00005, 00006, 00007, and 00008 which are different from the focused specific user identifier, as the anonymization candidate record group related to the target record.

In the step S103, the record extraction unit 102 extracts, from the anonymization candidate record group extracted in the step S101, a plurality of records which is able to store a property included in each record. In this exemplary embodiment, the records which are able to store a property included in each record are called "property storage candidate records". In following descriptions, extracting steps of the property storage candidate records are explained in detail.

Generally, when a property existing between a plurality of anonymized data sets is extracted or estimated, an original property which exists before anonymization is obscured after anonymization. For example, when the data sets shown in Fig. 11A and Fig. 11B are targeted, as described in "Technical Problem", since the data sets are abstracted as shown in Fig. 12A and Fig. 12B in a common anonymization technology, the property to be originally possessed is obscured.

Regarding the original property shown in Fig. 11C, for example, the original property "A>E" existing with respect to the patient with the user identifier 00001 is obscured, such as "A>E, A>G, B>E, B>G", in the data sets after general anonymization shown in Fig. 12A and Fig. 12B. This is further specifically explained below.

The date of birth (1985/1/1) of the patient with the user identifier 00001 which is included as a quasi-identifier in Fig. 11A and Fig. 11B is converted into the term (1976 to 1985) by the general anonymization as shown in Fig. 12A and Fig. 12B. The date of birth of the patient is abstracted as a term representing a time range due to the conversion and consequently is obscured compared with the state before the conversion. As described above, the user identifier is deleted when the anonymized data sets (Fig. 12A and Fig. 11B) is given to users. When only anonymized data sets are focused, as a result of the conversion, the records having the disease name A in the term (1976 to 1985) in Fig. 12A (date of medical care, 2010/4) include, as properties, the disease names E and G included in the two records related to the same term in Fig. 12B (date of medical care, 2010/5). Therefore, the properties on the disease name A are "A>E, A>G".

In this case, as a result of the conversion, even in Fig. 12A (date of medical care, 2010/4), the records related to the term (1976 to 1985) target not only the records including the disease name A, but also the records including the disease name B. As a result, with respect to the disease name B, the records include the disease names E and G included in the two records related to the tern in Fig. 12B (date of medical care, 2010/5), as properties. The properties related to the disease B are "B>E, B>G".

In general anonymization exemplified in Fig. 11A and Fig. 11B, and Fig. 12A and Fig. 12B, one property (A>E) originally included before anonymization is obscured and the four properties (A>E, A>G, B>E, B>G) are consequently estimated as described above, since anonymity is satisfied. "B>G" in the obscured properties is the property which the user identifier 00002 has, as shown in Fig. 11C. In the above described example, therefore, two original properties (A>E, B>G) are abstracted to be four ambiguous properties.

Compared with such general anonymization, a degree of ambiguity (ambiguity level) of properties which is generated when anonymization is executed is acquired in the exemplary embodiment.

The records on the user identifier 00001 shown in Fig. 12B (date of medical care, 2010/5) is formed to be one group by using the user identifier 00002 having the same term acquired on the basis of the date of birth, as a quasi-identifier. In the exemplary embodiment, the group is called "anonymity group". By forming (generating) such anonymity group, the degree of ambiguity of properties which is generated when anonymization is executed can be acquired on the basis of difference between the number of types of properties estimated after anonymization and the number of types of original properties before anonymization.

The acquisition method of the degree of ambiguity is not limited to the method using the difference. For example, the degree of ambiguity can be acquired by calculating a rate of increase of the number of types of properties estimated after anonymization on the basis of the number of types of original properties before anonymization. In the example shown in Fig. 11A and Fig. 11B, and Fig. 12A and Fig. 12B, the degree of ambiguity is 2 (=4-2), which is calculated by the difference. The degree of ambiguity which is calculated by using the rate of increase is 2 (200%=4/2). In following descriptions, the case in which the degree of ambiguity is derived using the difference is explained as an example.

In step S103, the record extraction unit 102 extracts a plurality of records in which the degree of ambiguity of properties after anonymization is small, from anonymization candidate record group acquired as described above. In the record sets shown in Fig. 11B, when the record having the user identifier 00001 is targeted, two records having the user identifiers 00005 and 00007 in Fig. 11B are extracted as a property storage candidate record, in the step S103. The extraction method is further explained.

When the 2-diversity is satisfied as the example described above, the record extraction unit 102 extracts records on the user identifiers 00002, 00004, 00005, 00006, 00007, and 00008 as the anonymization candidate record group of the record (target record) on the user identifier 00001 shown in Fig. 11 B. In other words, the record extraction unit 102 selects a plurality of records each having sensitive information which is different from the sensitive information (i.e. disease name E) on the user identifier 00001, in the date of medical care (2010/5 shown in Fig. 11B). In this case, including the same sensitive information as the record on the user identifier 0001 as the target identifier, the record on the user identifier 0003 is excluded from the anonymization candidate record group.

The record extraction unit 102 calculates the degree of ambiguity of properties in case that, with respect to respective records configuring the anonymization candidate record group, an anonymization group is formed with the target record, in the step S103. In this case, when an anonymization group is formed with the target record in order, with respect to the user identification 00002, 00004, 00006, and 00008, the degree of ambiguity which can be calculated on the basis of the difference is 2. When an anonymization group is formed with the target record in order, with respect to the user identification 00005 and 00007, the degree of ambiguity which can be calculated on the basis of the difference is zero.

The degree of ambiguity calculated as above is preferably small in order to maintain the original property. The record extraction unit 102 therefore selects two records on the user identifiers, 00005 and 00007, as the property storage candidate record, when the record having the user identifier 00001 is a target record, in the step S103. The selected records are records in which ambiguity which can be estimated after abstraction is the smallest in the records having different other unique identifiers which are abstracted with the record 00001 having a currently focused user identifier (specific unique identifier).

In the above example, the processing configuration is explained, in which a property storage candidate record is selected on the basis of smallness of the degree of ambiguity of the properties, with respect to the case in which one target record is anonymized. However, the present invention explaining the exemplary embodiment, as an example, is not limited to the processing configuration, and for example two or more target records can be a processing target. In this case, the record extraction unit 102 calculates a degree of ambiguity of the two or more target records and a plurality of types of anonymization candidate record group which can be calculated on the basis of these target records. The record extraction unit 102 may extract a record with small abstraction level as a property storage candidate record on each target record, from the calculated results.

### (Anonymization unit 104)

An operation of the anonymization unit 104 is described. The anonymization unit 104 extracts a plurality of records forming an anonymity group from the plurality of records (property storage candidate records) selected in the step S103 (step S105). The anonymization unit 104 targets the plurality of records (i.e. anonymity group) extracted in the step S105 and performs anonymization of a quasi-identifier (step S107). In the step S107, the anonymization unit 104 abstracts quasi-identifiers each included in a plurality of records belonging to a focused anonymity group. Processing steps in the two steps are described in detail.

In the step S105, the anonymization unit 104 selects a record forming an anonymity group with a currently focused target record, from the property storage candidate record group acquired in the step S103. The record on the user identifier 00001 is focused as a target record, here. In this case, the record extraction unit 102 (step S101, step S103) described above selects records having the user identifiers 00005 and 00007, as a property storage candidate record.

In the above case, since desired anonymity to be satisfied is 2-diversity, any one of records on the user identifiers 00005 and 00007 just has to be selected. If desired anonymity can be satisfied, standard, an index, and a viewpoint about record selection is not limited to the aforementioned example. As one example, a method is assumed in which a degree of ambiguity, in case that a quasi-identifier after anonymization is compared with a quasi-identifier before anonymization, is evaluated, and, as the result of the evaluation, a record in which the degree of ambiguity is minimized is extracted. In this case, the record just has to be selected in which when the date of birth, as a quasi-identifier, is converted to a term, the term after conversion is shortened, from the two records, for the degree of ambiguity to be minimized.

When the date of birth shown in Fig. 11B is focused, if the term is considered which is represented by the difference between the date of birth of patients with the user identifier 00005 and 00007 and the date of birth of the patient with the user identifier 00001 which is used as a reference, it is understood that the term of the user identifier 00005 is short compared with the term of the user identifier 00007. The anonymization unit 104 therefore selects the record related to the user identifier 00005 so that the target record (record related to the user identifier 00001) forms an anonymity group.

Next, in step S107, with respect to the anonymity group which is formed in relation to the target record in the step S105, the anonymization unit 104 performs abstraction of quasi-identifiers each associated with a plurality of records configuring the anonymity group. As a general example on abstraction of a quasi-identifier, a case in which abstraction level is minimized through generalization of the quasi-identifiers is described here.

Fig. 4A is a diagram illustrating a table exemplifying anonymized results by using history information before anonymization shown in Fig. 11A in the first exemplary embodiment. Fig. 4B is a diagram illustrating a table exemplifying anonymized information, so that reduction of abstraction level of original properties (Fig. 11C) is suppressed, by using history information before anonymization shown in Fig. 11A in the first exemplary embodiment.

In Fig. 4A and Fig. 4B, the range indicated by dashed lines is information which is not disclosed when it is provided to users of anonymized information, and is shown for convenience of explanation. Therefore, the anonymization apparatus 100 may store a whole data configuration indicated by the dashed lines and the solid lines in Fig. 4A and Fig. 4B, before provision to users.

As shown in Fig. 4B, the records on the user identifiers 00001 and 00005 in the table of the date of medical care, 2010/05, form the anonymity group (II-I).

In Fig. 11B indicating the state before anonymization, the quasi-identifiers (sex, the date of birth) of the user identifier 00001 are (female, 1985/1/1). The quasi-identifiers of the user identifier 00005 are (female, 1976/5/5) in Fig. 11B. The anonymization unit 104 abstracts these quasi-identifiers through generalization and gives the abstracted quasi-identifiers to both records after anonymization.

The abstraction in the exemplary embodiment is performed through generalization, as one example. It is possible to convert detailed information (specific category value) into ambiguous information through generalization. In generalization from the records in Fig. 11B to the records in Fig. 4B, sex is abstracted on the basis of the generalization tree shown in Fig. 13. The date of birth is converted from the specific value to the term in which a specific date is obscured.

Specifically, both of two records with the user identifiers 00001 and 00005 include "female", as sex, and become "female" after abstraction on the basis of hierarchy represented by the generalization tree shown in Fig. 13. Concerning the date of birth, as a specific numerical value, the minimized range (term) which includes the value representing the date of birth of the patient with user identifier 00001 and the value representing the date of birth of the patient with user identifier 00005 is selected. In the exemplary embodiment, information representing "month" and "day" is deleted from the selected minimized range. Thereby, as shown in Fig. 4B, the date of birth of each of the two patients configuring the anonymity group (II-I) is converted into the term including only "year" of "1976 to 1985" after abstraction as shown in Fig. 4B. The anonymization unit 104 generates, through the abstraction processing, the record having the quasi-identifier "(female, 1976 to 1985)" from the records related to the date of medical care, 2010/05, of each of the two patients with the user identifiers 00001 and 00005, in the step S107.

The anonymization apparatus 100 performs the series of steps while sequentially changing the target records, and acquires the anonymity groups II-I to II-IV shown in Fig. 4B. The anonymization apparatus 100 acquires, by using steps similar to the series of steps described above, the anonymity groups I-I to I-IV shown in Fig. 4A on the basis of, for example, the medical care history on March, 2010 (not shown) and the medical care history on April, 2010 (Fig. 11 A), as the history information 100.

In the aforementioned exemplary embodiment, for facility of explanation, the processing of referring to the medical care histories on April and May (Fig. 11A and Fig. 11 B) is explained in order to acquire anonymization results on May (Fig. 4B). However, the present invention exemplified by the exemplary embodiment is not limited to such processing configuration. Specifically, in the exemplary embodiment, as one example of the history information with a specific unit, for convenience of explanation, the history information per month (on a monthly basis) is employed, and the history information on n-th month and (n+1)-th month (n is an integer from 1 to 11) is referred according to time passage. However even though a property with time passage is focused, the present invention is not limited to the history information per month, and can handle desired specific unit, such as a period of time, a week, a year.

Even though the property per month with time passage is focused, the present invention is not limited to focusing n-th month and (n+1) -th month. The present invention may focus a plurality of inconsecutive desired months, such as n-th month and (n+2)-th month or (n+3)-th month. When the property per month is focused, the present invention is not limited to order of time passage, and history information on a desired month before a desired month whose anonymization is desired may be referred to.

Since various methods, generalization, perturbation, or the like may be employed as the abstraction method in the step S107, the present invention is not limited to the specific example on abstraction shown in Fig. 4B.

The anonymization apparatus 100 generates two anonymity table shown in Fig. 4A and Fig. 4B by performing the series of steps described above with respect to each of the record sets of the date of medical care, 2010/04 and 2010/05. These anonymity tables are data sets in which anonymization satisfying 2-diversity is performed while maintaining the original property shown in Fig. 11C as much as possible, with respect to each of data sets shown in Fig. 11A and Fig. 11B.

Six properties, "A>E", "A>F", "B>E", "B>G", "C>F", and "C>H" are estimated between two anonymity tables generated through characteristic steps of the exemplary embodiment (Fig. 4A and Fig. 4B). These properties are closer to the original properties before anonymization (four: Fig. 11 C) than properties (eight) which can be estimated from results of general anonymization explained by referring to Fig. 12A and Fig. 12B in "Technical Problem".

According to the anonymization apparatus 100 of the exemplary embodiment, optimum and sufficient anonymization can be performed while maintaining the original property existing between a plurality of records each having an identical identifier as much as possible, when history information is anonymized. According to the exemplary embodiment, it is possible to provide a data set storing many properties existing between a plurality of records sharing an identical identifier, while satisfying desired anonymity. According to the exemplary embodiment, when analysis is performed by using an anonymized data set, many original properties included in the original data can be stored. According to the exemplary embodiment, possibility of misunderstanding due to analysis results on the basis of a false property which occurs when the general anonymization technology is used can be largely reduced.

A case in which a series of anonymization processing in the above exemplary embodiment is generalized is explained. In this case, a case in which a record ri having a unique identifier (user identifier) is anonymized is considered. A property exists between the record ri and a record rj having a common (identical) unique identifier. The property which exists between the record ri and the record rj is described as pij.

In order to satisfy desired anonymity, a quasi-identifier of the record ri having a unique identifier is modified (i.e. abstracted) to make it difficult to distinguish a quasi-identifier of a record with other unique identifier. As an example of the abstraction, there is a method in which the record ri with an identical quasi-identifier is allocated to one or more records with other unique identifier. A range of value of a quasi-identifier included in a plurality of records for modification target may be any one of the following.
(1) a case in which a range of value of one record perfectly includes a range of value of the other records, or
(2) a case in which a range of value of one record partially overlaps a range of value of the other records.

The number and types of the other records having commonality with the quasi-identifier included in the record ri through abstraction are determined depending on anonymity (k-anonymity, 1-diversity, etc.) to be satisfied.

In the exemplary embodiment, when abstraction is executed with respect to the record ri having a unique identifier and a plurality of records having other unique identifier, the abstraction is executed so that the property pij is not obscured as much as possible. In the exemplary embodiment, in order to achieve such abstraction, the records having the other unique identifiers which should be abstracted with the record ri having the unique identifier are selected on the basis of smallness of ambiguity of a plurality of types of questions on sex which can be estimated after abstraction.

The ambiguity of a plurality of types of questions on sex which can be estimated after anonymization can be measured, for example, using the number of properties estimated after anonymization, geometrical distance between a plurality of estimated properties, semantic distance, or the like. Therefore the ambiguity is not limited to a specific measurement method.

In the exemplary embodiment, as a record to which a quasi-identifier in common with that of the record ri is allocated, a record is selected which includes a property similar to pij, and in which ambiguity of a plurality of types of properties estimated after anonymization is reduced. The plurality of records acquired in the selection are called "anonymity group" in the aforementioned anonymization apparatus 100.

Finally, in the exemplary embodiment, abstraction is executed in which the record ri and the plurality of selected records are processing target. As a specific method for abstraction, generalization for converting those into a value with more abstract concept compared with the original value, perturbation for adding noises to those, or the like, can be employed. If desired anonymity is satisfied, any method for abstraction is available, and a combination of a plurality of types of methods may be employed.

According to the exemplary embodiment employing such characteristic processing, when history information is anonymized, optimum and sufficient anonymization can be executed while maximally maintaining the original property existing between a plurality of records each having an identical identifier.

### <Second exemplary embodiment>

Next, a second exemplary embodiment which is based on the first exemplary embodiment is described. In following descriptions, a part characteristic of the second exemplary embodiment is mainly described, and descriptions which overlap configurations of the first exemplary embodiment are omitted.

Fig. 2 is a functional block diagram illustrating a configuration of an anonymization apparatus 200 of a second exemplary embodiment of the present invention. An anonymization apparatus 200 includes a record extraction unit 202, an anonymization unit 204, an original data storage unit 206, a property analysis unit 208, and an anonymity input unit 210, and a data storage unit 212.

Fig. 5 is a flowchart illustrating steps of control processing in the anonymization apparatus of the second exemplary embodiment of the present invention. The anonymization apparatus 200 of the exemplary embodiment performs step S201 prior to step S203 to step S209 which are similar to the step S101 to the step S107 in Fig. 3 of the first exemplary embodiment. The step S201 is processing which is realized by the original data storage unit 206 and the property analysis unit 208 described below.

The original data storage unit 206 can store history information 110 externally acquired. It is assumed that one or more records each having an identical user identifier in the history information 110. Individual history information 110 also includes at least a user identifier, a quasi-identifier, sensitive information in the exemplary embodiment, and are information such as record sets shown in Fig. 11A and Fig. 11B.

The property analysis unit 208 read the history information 110 stored in the original data storage unit 206, and, by analyzing a plurality of records configuring data sets (Fig. 11A and Fig. 11B) which are read history information, extracts a property existing between the records. It is supposed that the analysis performed by the property analysis unit 208 is, for example, various data mining or statistical analysis techniques such as a collocation analysis, a correlation analysis, a regression analysis, time-series analysis on an attribute value between the plurality of records configuring the data sets. In the second exemplary embodiment, a case of time-series analysis is described, as an example, like the first exemplary embodiment.

The original data storage unit 206 can derive the property shown in Fig. 11C when the data sets exemplified in Fig. 11A and Fig. 11B are targeted for analysis.

The record extraction unit 202 extracts an anonymization candidate record group from the history information 110, like the record extraction unit 102 of the first exemplary embodiment (step S203). Next, the record extraction unit 202 extracts a property storage candidate record from the anonymization candidate record group, like the record extraction unit 102 of the first exemplary embodiment (step S205). When extracting the property storage candidate record, the record extraction unit 202 extracts a record with a different user identifier, as the property storage candidate record, while satisfying anonymity inputted from the anonymity input unit 210, on the basis of smallness of ambiguity of the property extracted from the property analysis unit 204.

It is possible to arrange, from the outside, information on anonymity which a data set after anonymization in the anonymization unit 204 has to satisfy, in the anonymity input unit 210.

The anonymization unit 204 forms an anonymity group on the basis of the property storage candidate record extracted in the record extraction unit 202, almost like the anonymization unit 104 in the first exemplary embodiment (step S207). The anonymization unit 204 abstracts quasi-identifiers included in a plurality of records forming the anonymity group, almost like the anonymization unit 104 in the first exemplary embodiment (step S209). The anonymization unit 204 performs processing so that the anonymity arranged in the anonymity input unit 210 is satisfied, in the abstraction. The data storage unit 212 can store the anonymization data generated by the anonymization unit 204.

Even in the anonymization apparatus 200 of the exemplary embodiment, it is possible to optimally and fully perform anonymization when history information is anonymized, while maximally maintaining an original property existing between a plurality of records each having an identical identifier.

According to the second exemplary embodiment, in particular, a property included in the history information 110 can be analyzed in the property analysis unit 208. According to the exemplary embodiment, therefore, anonymization is realized in which abstraction level of the property extracted through the analysis is reduced.

### <Third exemplary embodiment>

A third exemplary embodiment is described on the basis of the first and the second exemplary embodiments. In following descriptions, a part characteristic of the second exemplary embodiment is mainly described, and descriptions which overlap configurations of the first and the second exemplary embodiments are omitted.

Fig. 6 is a functional block diagram illustrating a configuration of an anonymization apparatus 300 of the third exemplary embodiment of the present invention. The anonymization apparatus 300 of the exemplary embodiment includes a record extraction unit 302, an anonymization unit 304, an original data storage unit 306, a property analysis unit 308, an anonymity input unit 310, a data storage unit 312, and an importance evaluation unit 314. The anonymization apparatus 300 of the exemplary embodiment differs from the second exemplary embodiment in having the importance evaluation unit 314 in addition to the configuration of the anonymization unit 200 of the second exemplary embodiment. Concerning the other configuration, since elements thereof are similar to those of the anonymization unit 200, descriptions thereon are omitted in the exemplary embodiment.

As a modified example of the anonymization unit 300 of the third exemplary embodiment described below, a device configuration without at least one of the original data storage unit 306, the anonymity input unit 310, and the data storage unit 312 is assumed.

In the plurality of types of properties described above exemplary embodiments, importance may be different with respect to each property. Information, for example, representing a property of "a user having a disease will have a different disease with high confidence" and a property of "a user having a disease is more likely to have a specific disease compared with a user without the disease" are highly important compared with the other properties. In the exemplary embodiment, if it is difficult to store all types of the properties, importance of the individual property is evaluated by using the importance evaluation unit 314. The anonymization apparatus 300 of the exemplary embodiment determines a property to be stored on the basis of the evaluated importance, and generates an anonymity group so that the important property is satisfied as much as possible, within given restriction of anonymity.

Fig. 7 is a flowchart illustrating steps of control processing in the anonymization apparatus of the third exemplary embodiment of the present invention. The anonymization apparatus 300 of the exemplary embodiment performs processing step S301, and step S307 to step S313 which are almost similar to the step S201 to the step S209 in the flowchart shown in Fig. 5 of the second exemplary embodiment. Further, the anonymization apparatus 300 newly performs step S303 and step S305 between the step S301 and the step S307. The step S303 and the step 305 are processing which is realized by the importance evaluation unit 314.

In the step S301, the property analysis unit 308 extracts a plurality of properties included in records related to each user identifier from the history information 110 stored in the original data storage unit 306, just like the step S201 in the second exemplary embodiment.

Next, in the step S303, with respect to the plurality of properties extracted in the step S301, the importance evaluation unit 314 evaluates importance thereof. In the step S305, the property importance evaluation unit 314 extracts a property with high importance from the plurality of properties on the basis of the evaluation results, and informs the record extraction unit 302 of the extracted property.

Processing of the step S307 and the following steps performed by the record extraction unit 302 and the anonymization unit 304 are similar to processing of the step S205 and the following steps shown in Fig. 5 of the second exemplary embodiment. In the step S307, when extracting a record having a different user identifier whose property can be stored, the record extraction unit 302 extracts a record having a different user identifier in which the property with high importance extracted by the importance evaluation unit 314 in the step S305 can be stored.

The importance evaluation unit 314 is further described here. As an example of an important property, a property which appears frequently under a certain condition compared with the other conditions is given. An indexes representing importance of the property are, for example, Confidence, Lift, and entropy. Confidence represents probability with conditions that a certain event occurs under a certain condition. Lift represents how a specific event tends to occur in case that a certain condition exists and in case that the certain condition does not exist. Entropy represents how rare occurrence of the specific event is. In the exemplary embodiment, a property with high confidence is handled as an important property.

Fig. 14A is a diagram exemplifying a table of history information before anonymization (medical care history in June, 2010). Fig. 14B is a diagram exemplifying a table of history information before anonymization (medical care history in July, 2010). The tables include records of different date of medical care with respect to a plurality of user identifiers which are similar to that of the tables shown in Fig. 11A and Fig. 11B.

Fig. 14C is a diagram exemplifying a table for each user identifier on properties existing between history information before anonymization from April to July, 2010 (each data set shown in Fig. 11A, Fig. 11B, Fig. 14A, and Fig. 14B).

In the exemplary embodiment, the importance evaluation unit 314 targets these properties exemplified in Fig. 14C and evaluates appearance frequency and confidence on respectine properties, in the step S303. In the properties, data described on the rightmost side is called a conclusion part, and the other parts are called a premise part. For example, in the property "B>G>X", the premise part is "B>G" and the conclusion part is "X". The confidence is an index representing a rate of appearance of the conclusion part when the premise part appears. The rate of appearance of the conclusion part "X" on the occasion of appearance of the premise part "B>G" is 100%. Since the property "B>G>X" appears in relation to the user identifiers 00002 and 00004 in Fig. 14C, appearance frequency thereof is 2.

When the data set (Fig. 14B) on July, 2010 is anonymized, the property in which the sensitive information (disease name) of July, 2010 is the conclusion part is set as a property to be stored. With respect to the user identifier 00002 shown in Fig. 14C, "B>G>L>X", "G>L>X", "B>G>X", "B>X", "G>X", and "L>X" are extracted as the property to be stored.

Initially, the importance evaluation unit 314 evaluates respective properties shown in Fig. 14C on the basis of appearance frequency of the premise part. It is set as a threshold value that an identical property appears twice or more. The importance evaluation unit 314 targets the property having the threshold value or greater for storage. The importance evaluation unit 314 extracts the three properties "B>G>X", "B>X", and "G>X" on the basis of the threshold value.

Next, the importance evaluation unit 314 evaluates the properties on the basis of confidence, and extracts the property having the highest confidence as the result of evaluation. Confidence on the three properties are "B>G>X:100%", "B>X:100%", and "G>X:100%". When a plurality of properties with maximum confidence exist, the importance evaluation unit 314 evaluates the plurality of focused properties, and determines (selects) any one of the properties as the property to be stored, on the basis of length of the properties and frequency of appearance of the properties.

When evaluation is performed on the basis of the length of the properties on the user identifier 00002 shown in Fig. 14C, "B>G>X" has length 3, and each of "B>X" and "G>X" have length 2. If it is assumed that the longest property is important (useful), the importance evaluation unit 314 determines that the record on July, 2010 of the patient identified by the user identifier 00002 shown in Fig. 14C is the property to be stored, and selects "B>G>X".

According to the exemplary embodiment, the most important property can be determined by measuring importance of the property in consideration of confidence, appearance frequency, length, etc. for each user identifier.

Next, with respect to records having the user identifiers 00002, 00004, 00006, and 00008, the importance evaluation unit 314 extracts as the most important property in the properties extracted on the records, in the step S305. In the exemplary embodiment, in the step S307 and the following steps, while maintaining the most important property, an anonymity group is generated just like the first and the second exemplary embodiments. Thereby a plurality of records each having the date of medical care of July, 2010 are anonymized as shown in Fig. 9.

The record extraction unit 302 in the third exemplary embodiment forms the anonymity group in which ambiguity of the property to be stored is suppressed, just like the first and the second exemplary embodiments. For example, with respect to the record on July, 2010 of the patient identified by the user identifier 00001 (Fig. 14B), the record extraction unit 302 extracts a different disease name from the records on July, 2010 in order to satisfy 2-diversity. In this case, records having all the user identifiers other than the user identifier 00001 correspond to a candidate for extraction.

Regarding a case in which the record extraction unit 302 forms an anonymity group by using records of the user identifier 00001 and each user identifier, the importance evaluation unit 314 evaluates a degree of ambiguity of properties. The evaluation of the degree of ambiguity just has to be performed like the evaluation of the degree of ambiguity in the first exemplary embodiment.

In the exemplary embodiment, through such steps, for example, when a case is focused in which the anonymization unit 304 forms the anonymity group (III-III) by using the records on the user identifier 00001 as the target records, the record having the user identifier 00003 is selected as the record in which degree of ambiguity is minimum.

Fig. 9 is a diagram illustrating a table exemplifying anonymized results, so that reduction of abstraction level of original properties (Fig. 14C) is suppressed, by using history information before anonymization shown in Fig. 14B in the third exemplary embodiment.

The anonymization apparatus 300 of the third exemplary embodiment, by evaluating importance of properties using the importance evaluation unit 314, can generate the anonymity group, while maintaining properties with high importance from a plurality of types of properties included in a plurality of records each having a common user identifier, and perform anonymization on the basis of the generated anonymity group.

According to the exemplary embodiment, the data set storing many properties existing between a plurality of records sharing an identical user identifier while satisfying desired anonymity can be provided.

In particular, according to the third exemplary embodiment, when the history information 110 includes a plurality of properties for a long term which is from April to July on the focused time-series property, compared with the first exemplary embodiment, an appropriate anonymization can be achieved in a state of a low abstraction level, with respect to the properties with high importance in the plurality of properties. According to the anonymization apparatus 300 of the exemplary embodiment, by performing anonymization on the basis of the generated anonymity group as described above, anonymity can be guaranteed and the important properties can be also stored.

### <Fourth exemplary embodiment>

A fourth exemplary embodiment is described on the basis of the first to the third exemplary embodiments. In following descriptions, a part characteristic of the second exemplary embodiment is mainly described, and descriptions which overlap configurations of the first to fourth exemplary embodiments are omitted.

Fig. 8 is a functional block diagram illustrating a configuration of an anonymization apparatus 400 of the fourth exemplary embodiment of the present invention. The anonymization apparatus 400 of the exemplary embodiment includes a record extraction unit 402, an anonymization unit 404, an original data storage unit 406, a property analysis unit 408, an anonymity input unit 410, a data storage unit 412, an importance evaluation unit 414, and a property holding request reception unit 416. The anonymization apparatus 400 of the exemplary embodiment includes differ from the third exemplary embodiment in including the property holding request reception unit 416 in addition to the configuration of the anonymization apparatus 300 of the third exemplary embodiment. Concerning the other configuration, since elements thereof are similar to those of the anonymization unit 300, descriptions thereon are omitted in the exemplary embodiment.

As a modified example of the anonymization apparatus 400 of the fourth exemplary embodiment described below, a device configuration without at least one of the original data storage unit 406, the anonymity input unit 410, and the data storage unit 412 is supposed.

In the fourth exemplary embodiment, when a property to be stored in advance is clear, an anonymity group is formed so that the property is stored. The anonymization apparatus 400 can receive the property whose storage is desired as a request from the outside by using the property holding request reception unit 416.

The property holding request reception unit 416 can receive a data file and information which represents the property whose storage is desired and which is inputted through an input interface, such as GUI (Graphical User Interface), and can store the information. The information representing the property whose storage is desired has to include a format which can be handled by a computer. However there is no limit on an inputting method, a format, a storage method, and communication method in the present invention exemplified by the exemplary embodiment. As one example, it is supposed that "A>E", "A>F", and "A>Z" are described in a file in which the property whose storage is desired is listed.

In accordance with detection of the property inputted to the property holding request reception unit 416, the importance evaluation unit 414 extracts the detected property as the satisfactory important property. When existence of the property is not detected, the importance evaluation unit 414 performs operations similar to that of the importance evaluation unit 314 of the third exemplary embodiment.

The exemplary embodiment also refers to Fig. 14C in the third exemplary embodiment. The properties "A>E" and "A>F" which are inputted to the property holding request reception unit 416 exist between the data sets from April to July shown in Fig. 14C (Fig. 11A, Fig. 11B, Fig. 14A, and Fig. 14B). Accordingly, in the exemplary embodiment, the importance is enhanced by the importance evaluation unit 414. In Fig. 14C, since the property "A>Z" does not exist, the property "A>Z" is considered unimportant. When the importance is evaluated on the basis of the confidence, for example, it can be evaluated using an importance evaluation equation, g=αc, where g is a coefficient amplifying the importance, c is a coefficient amplifying the confidence, and α is a coefficient amplifying the importance.

The importance evaluation unit 414 sets, for example, α=2 for the same property as the property inputted to the property holding request reception unit 416, and sets α=0.5 for a different property, and gives a high evaluation to an importance of the property inputted to the property holding request reception unit 416.

According to the exemplary embodiment, it is possible provide the data sets storing many properties existing between a plurality of records sharing an identical identifier while satisfying desired anonymity.

According to the fourth exemplary embodiment, in particular, anonymization of history information can be realized in a state in which abstract level of the property given from the outside is reduced, from one or more properties included in the history information.

### (Example of a hardware configuration)

An example of a hardware configuration is explained in which devices in the above exemplary embodiments can be realized. Fig. 10 is a diagram explaining, as an example, a hardware configuration of a computer (information processing apparatus) which can achieves the first to the fourth exemplary embodiments of the present invention.

The hardware of the information processing apparatus (computer) 1000 shown in Fig. 10 includes a configuration in which a CPU 11, a communication interface (I/F) 12, an input/output user interface 13, a ROM (Read Only Memory) 14, a RAM (Random Access Memory) 15, a storage device 17, and a drive device 18 of a computer-readable recording medium 19 are included and these are connected to each other through a bus 16. The input/output user interface 13 is a keyboard, an example of an input device, and a man/machine interface (user interface: UI) like a display, as an output device. The communication interface 12 is a general communication means performing communication, through a communication network 600, between the anonymization apparatuses of the exemplary embodiment described above (Fig.1, Fig. 2, Fig. 6, and Fig. 7) and an external device. In such hardware configuration, the CPU 11 controls a whole operation of the information processing apparatus 1000 as the device of each exemplary embodiment.

The present invention explained, as example, by the first to the fourth exemplary embodiments is achieved by supplying programs which can achieve functions of the flowchart (Fig. 3, Fig. 5, Fig. 9) referred in the explanations or each part (each block) shown in devices in the block diagrams of Fig. 1, Fig. 2, Fig. 6 and Fig. 7 to the information processing apparatus 1000 shown in Fig. 10, and by installing the programs to the CPU 11 and causing the CPU to execute the programs. In this case, as various data storage unit (206, 212, etc.), the storage unit 17, which is a hardware resource, is optionally used. As various input units and reception units (310, 410, 416), the input/output interface 13, which is a hardware resource, is optionally used.

The programs supplied to the information processing apparatus 1000 are stored to a readable/writable temporal memory (15) or non-volatile storage device like a hard disc drive (17). In the storage device 17, program groups 17A are programs which can achieve functions of respective parts shown in the anonymization apparatuses (100, 200, 300, 400) in the exemplary embodiments. Various pieces of storage information 17B are, for example, the history information 110, information representing desired anonymity, and the like, in the exemplary embodiments.

In the above description, a method for supplying programs to the devices can employ currently general steps, such as a method installing the programs into the devices through various computer-readable recording medium (19) such as CD-ROM, flash memory, and a method for downloading the programs from the outside through communication lines (600) like Internet. In such case, it can be understood that the present invention is configured by codes representing the computer programs (program groups 17A), or a recording medium storing the codes (19).

In the anonymization apparatuses (100, 200, 300, 400) explained in the above exemplary embodiments, for convenience of explanation, the anonymization apparatus which is configured as a single device is exemplified. The anonymization apparatus is not limited to the single device configuration, and can be achieved by a computer system in which the functions of the respective parts above described are optionally arranged in a plurality of information processing apparatuses which can perform communication. The anonymization apparatus of the exemplary embodiments above described can be achieved by using a plurality of virtual machines optionally performed in the single or a plurality of information processing apparatuses. Since currently general technology can be applied to such various mounting methods, detailed descriptions thereon are omitted.

As the method for supplying the history information 110 to the anonymization apparatus in the exemplary embodiments, a method in which a user supplies the information 110 by using the input/output interface 13, etc., or a method for supplying the information 110 from the external device which can communicate with the anonymization apparatus (i.e. M2M: Machine to Machine), or the like, is available.

With respect to a method for supplying desired anonymity (anonymity information) to the anonymity input unit (210, 310, 410) in the second to the fourth exemplary embodiments and a method for supplying a property (property information) to the property holding request reception unit 416 in the fourth exemplary embodiment, a method in which a user supplies using UI or a method for supplying from the external device which can communicate with the anonymization apparatus can be employed.

The anonymization apparatus of the exemplary embodiments handles, as one example, the property in which a disease changes as time passes, just like the descriptions in "Background Art", for convenience of explanation. The present invention exemplified by the exemplary embodiment in not limited to the property (a disease changes as time passes), and can be applied to various properties. For example, the present invention is applicable to a property related to a co-occurrence relation between diseases.

The exemplary embodiment above described targets, as one example, the property existing for each user identifier. The present invention is not limited to the property employed, as an example, in the exemplary embodiments, and may be applied to a case in which a common property is stored (maintained) in a user identifier having a common quasi-identifier (identical quasi-identifier).

A part or all of the above exemplary embodiments and a modified example thereof can be described below. However the present invention exemplified by the above exemplary embodiments and the modified example thereof are not limited to the following. The following are,

### (Supplemental note 1)

An anonymization apparatus, including: record extracting means for extracting, with respect to history information including a plurality of records each of which includes unique identification information associated with at least a quasi-identifier and sensitive information, on the basis of smallness of ambiguity of a property existing between the plurality of records that are able to satisfy desired anonymity and share a specific unique identifier, a record with other unique identifier different from the specific unique identifier from the history information; and anonymizing means for giving commonality to and thereby abstracting the quasi-identifier each included in the plurality of records, so that an individual attribute in the plurality of records extracted by the record extracting means satisfies the desired anonymity.

### (Supplemental note 2)

The anonymization apparatus of supplemental note 1, wherein the record extracting means extracts a record in which ambiguity which is able to be estimated after abstraction is the smallest, in the records having the other unique identifier, the records being abstracted with the record having the specific unique identifier.

### (Supplemental note 3)

The anonymization apparatus of the supplemental note 1 or the supplemental note 2, wherein the record extracting means arranges the record having the specific unique identifier and the extracted record having the record with the other unique identifier different from the extracted specific unique identifier into one group, and the anonymizing means performs the abstraction by the group.

### (Supplemental note 4)

The anonymization apparatus of any one of the supplemental note 1 to the supplemental note 3, further including: property analysis means for extracting the property from the history information by analyzing a plurality of records configuring the history information.

### (Supplemental note 5)

The anonymization apparatus of any one of the supplemental note 1 to the supplemental note4, further including: evaluation means for evaluating importance of the properties when a plurality of types of the properties exist, and selecting an important property to be prioritized in the extraction by the record extracting means.

### (Supplemental note 6)

The anonymization apparatus of the supplemental note 5, further including: request reception means for enabling entry of a request related to the property whose storage is desired in the plurality of types of the properties.

### (Supplemental note 7)

The anonymization apparatus of the supplemental note 6, wherein the evaluation means evaluates importance of the property extracted by the property analysis means after enhancing the importance of the property, which is entered by the request reception means, compared with the other property.

### (Supplemental note 8)

The anonymization apparatus of the supplemental note 7, further including: setting means for setting a method for evaluating the importance of the property by the evaluation means.

### (Supplemental note 9)

An anonymization method, including: extracting, with respect to history information including a plurality of records each of which includes unique identification information associated with at least a quasi-identifier and sensitive information, on the basis of smallness of ambiguity of a property existing between the plurality of records that are able to satisfy desired anonymity and share a specific unique identifier, a record with other unique identifier different from the specific unique identifier from the history information by using a computer; and giving commonality to and thereby abstracting the quasi-identifier each included in the plurality of records, so that an individual attribute in the plurality of records extracted by the record extracting means satisfies the desired anonymity, by using the computer or a different computer.

### (Supplemental note 10)

The anonymization method of the supplemental note 9, wherein the extracting includes extracting a record in which the ambiguity which is able to be estimated after abstraction is the smallest, in the records having the other unique identifier, the records being abstracted with the record having the specific unique identifier.

### (Supplemental note 11)

The anonymization method of the supplemental note 9, wherein the extracting includes arranging the record having the specific unique identifier and the record having the other unique identifier different from the extracted specific unique identifier into one group; and the anonymizing includes performing the abstraction by the group.

### (Supplemental note 12)

A computer program, causing a computer to execute:
a record extracting function for extracting, with respect to history information including a plurality of records each of which includes unique identification information associated with at least a quasi-identifier and sensitive information, on the basis of smallness of ambiguity of a property existing between the plurality of records that are able to satisfy desired anonymity and share a specific unique identifier, a record with other unique identifier different from the specific unique identifier from the history information; and
an anonymizing function for giving a commonality to and thereby abstracting the quasi-identifier each included in the plurality of records, so that an individual attribute in the plurality of records extracted by the record extracting means satisfies the desired anonymity.

### (Supplemental note 13)

The computer program of the supplemental note 12, wherein the record extracting function extracts a record in which the ambiguity which is able to be estimated after abstraction is the smallest, in the records having the other unique identifier, the record being abstracted with the record having the specific unique identifier.

### (Supplemental note 14)

The computer program of the supplemental note 12 or the supplemental note 13, wherein the record extracting function arranges the record having the specific unique identifier and the record having the other unique identifier different from the extracted specific unique identifier into one group; and the anonymizing function performs the abstraction by the group.

While having described the present invention of the present application referring to the exemplary embodiments, the present invention is not limited to the above mentioned exemplary embodiments. It is to be understood that various changes can be made within the scope of the present invention by those ordinarily skilled in the art.

This application claims priority from Japanese Patent Application No. 2011-274791 filed on December 15, 2011, the contents of which are incorporation herein by reference in their entirety.

### [Reference Signs List]

11 CPU
12 communication interface (I/F)
13 input/output user interface
14 ROM
15 RAM
16 bus
17 storage device
18 drive device
19 recording medium
100, 200, 300, 400 anonymization apparatus
102, 204, 302, 402 record extraction device
104, 204, 304, 404 anonymization unit
110 history information
206, 306, 406 original data storage unit
208, 308, 408 property analysis unit
210, 310, 410 anonymity input unit
212, 312, 412 data storage unit
314 414 importance evaluation unit
416 property holding request reception unit
600 communication network
1000 information processing apparatus (computer)

## Claims

1. An anonymization apparatus, comprising:
record extracting means for extracting, with respect to history information including a plurality of records each of which includes unique identification information associated with at least a quasi-identifier and sensitive information, on the basis of smallness of ambiguity of a property existing between the plurality of records that are able to satisfy desired anonymity and share a specific unique identifier, a record with other unique identifier different from the specific unique identifier from the history information; and
anonymizing means for giving commonality to and thereby abstracting the quasi-identifier each included in the plurality of records, so that an individual attribute in the plurality of records extracted by the record extracting means satisfies the desired anonymity.

2. The anonymization apparatus according to claim 1, wherein the record extracting means extracts a record in which ambiguity which is able to be estimated after abstraction is the smallest, in the records having the other unique identifier, the records being abstracted with the record having the specific unique identifier.

3. The anonymization apparatus according to claim 1 or claim 2, wherein the record extracting means arranges the record having the specific unique identifier and the extracted record having the record with the other unique identifier different from the extracted specific unique identifier into one group, and the anonymizing means performs the abstraction by the group.

4. The anonymization apparatus according to any one of claim 1, claim 2 and claim 3, further comprising:
property analysis means for extracting the property from the history information by analyzing a plurality of records configuring the history information.

5. The anonymization apparatus according to any one of claim 1 to claim 4, further comprising:
evaluation means for evaluating importance of the properties when a plurality of types of the properties exist, and selecting an important property to be prioritized in the extraction by the record extracting means.

6. The anonymization apparatus according to claim 5, further comprising:
request reception means for enabling entry of a request related to the property whose storage is desired in the plurality of types of the properties.

7. The anonymization apparatus according to claim 6, wherein the evaluation means evaluates importance of the property extracted by the property analysis means after enhancing the importance of the property, which is entered by the request reception means, compared with the other property.

8. An anonymization method, comprising:
extracting, with respect to history information including a plurality of records each of which includes unique identification information associated with at least a quasi-identifier and sensitive information, on the basis of smallness of ambiguity of a property existing between the plurality of records that are able to satisfy desired anonymity and share a specific unique identifier, a record with other unique identifier different from the specific unique identifier from the history information by using a computer; and
giving commonality to and thereby abstracting the quasi-identifier each included in the extracted plurality of records, so that an individual attribute in the plurality of records satisfies the desired anonymity, by using the computer or a different computer.

9. The anonymization method according to claim 8, wherein the extracting comprises extracting a record in which the ambiguity which is able to be estimated after abstraction is the smallest, in the records having the unique identifier, the records being abstracted with the record having the specific unique identifier.

10. An computer program, causing a computer to execute:
a record extracting function for extracting, with respect to history information including a plurality of records each of which includes unique identification information associated with at least a quasi-identifier and sensitive information, on the basis of smallness of ambiguity of a property existing between the plurality of records that are able to satisfy desired anonymity and share a specific unique identifier, a record with other unique identifier different from the specific unique identifier from the history information; and
an anonymizing function for giving a commonality to and thereby abstracting the quasi-identifier each included in the plurality of records, so that an individual attribute in the plurality of records extracted by the record extracting function satisfies the desired anonymity.
